# EUROPEAN PATENT APPLICATION

(11) **EP 1 102 387 A2**
(43) Date of publication of application: **23.05.2001**
(21) Application number: 00125023.2
(22) Date of filing: 16.11.2000
(51) Int. Cl.: H02M 3/00

(54) **DC power supply apparatus**

(30) Priority: 19.11.1999 JP 32994499
(71) Applicant: SANKEN ELECTRIC CO., LTD., Niiza-shi Saitama-ken (JP)
(72) Inventor: Usui, Hiroshi, Niiza-shi, Saitama-ken (JP)
(74) Representative: Grünecker, Kinkeldey, Stockmair & Schwanhäusser Anwaltssozietät

(57) **Abstract**

An improved DC power supply apparatus which can be driven with high efficiency without power loss even with a light load connected to the DC power supply apparatus. The average value signal generation circuit 25 of a DC-DC converter 11 serves to average the control signal as outputted from a second control circuit 13 and output the averaged signal to the first control circuit 25 of a power factor correction circuit 24. The first control circuit 26 of the power factor correction circuit 24 is powered by a DC voltage generated by means of a capacitor 22 and a diode 21. When a predetermined time elapses after powered, the first control circuit 25 serves to alternately turn on and off the first switching circuit 8 if the average value signal as output from the average value signal generation circuit is no lower than the predetermined reference value and, on the other hand, serves to stop alternately turning on and off the first switching circuit 8 if the average value signal as output from the average value signal generation circuit is no higher than the predetermined reference value.

## Description

### CROSS REFERENCE TO RELATED APPLICATIONS

The subject application is related to subject matter disclosed in the Japanese Patent Application No.Heill-329944 filed in November 19, 1999 in Japan, to which the subject application claims priority under the Paris Convention and which is incorporated by reference herein.

### BACKGROUND OF THE INVENTION

### Field of the Invention

The present invention is related to a DC power supply apparatus which is provided with a power factor correction circuit.

### Prior Art

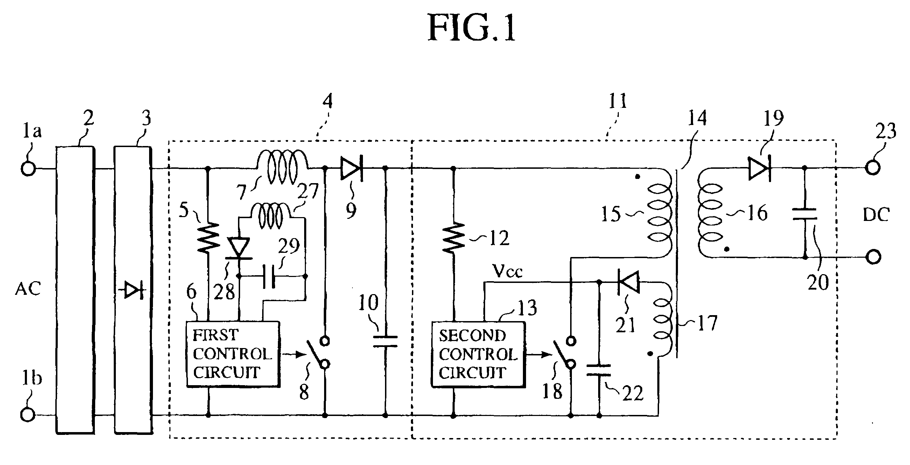

Fig.1 is a circuit diagram showing the configuration of a DC power supply apparatus in accordance with a prior art technique. The DC power supply apparatus as illustrated in Fig.1 includes a filter circuit 2 which is provided with input terminals 1a and 1b for making connection with an AC power supply and serves to eliminate noise signals such as harmonic currents from the input current, and a rectifier circuit 3 connected to the filter circuit 2 for rectifying the output of the filter circuit 2. The rectifier circuit 3 is connected to a power factor correction circuit 4. The power factor correction circuit 4 is connected to a DC-DC converter 11.

As illustrated in Fig.1, the power factor correction circuit 4 is composed of a start-up resistance 5 and a first control circuit 6 which are connected to the rectifier circuit 3 in parallel, a reactor 7 inserted on one of a pair of power transmission lines connected to the rectifier circuit 3 for boosting the voltage level, a first switching circuit 8 connected with the reactor 7 in series and connected with the first control circuit 6 in parallel, a diode 9 connected in series with the reactor 7 and a waveform smoothing condenser 10 is connected in parallel with the first switching circuit 8 through the diode 9. A secondary winding 27 is associated with the reactor 7 in order to generate a DC voltage by means of a diode 28 and a capacitor 29

Also, the DC-DC converter 11 is composed of a start-up resistance 12 and a second control circuit 13 which are connected in parallel with the waveform smoothing condenser 10, and a transformer 14 consisting of a primary winding 15 and a secondary winding 16 which are connected to the positive terminal of the waveform smoothing condenser 10 at one end, and a tertiary winding 17 which is connected to the negative terminal of the waveform smoothing condenser 10 at one end.

Furthermore, the DC-DC converter 11 includes a second switching circuit 18 connected between the other end of the primary winding 15 and the negative terminal of the waveform smoothing condenser 10, a diode 19 connected to one end of the secondary winding 16, a waveform smoothing condenser 20 connected in parallel with the secondary winding 16, output terminals 23 as output from the waveform smoothing condenser 20, a diode 21 inserted between the second control circuit 13 and the other terminal of the tertiary winding 17 and a waveform smoothing condenser 22 connected in parallel with the tertiary winding 17.

Next, the operation of the DC power supply apparatus having the configuration as described heretofore will be explained.

When an AC voltage is applied to the input terminals 1a and 1b, the filter circuit 2 functions to eliminate noise while the rectifier circuit 3 functions to rectify the AC voltage and output the rectified signal to the power factor correction circuit 4.

The power factor correction circuit 4 starts its operation when the first control circuit 6 is supplied with power through the start-up resistance 5. In this case, the first control circuit 6 serves to alternately turn on and off the first switching circuit 8 at a predetermined frequency in order to boost the output of the rectifier circuit 3 after conversion to the direct current signal. Namely, electric current flows through the reactor 7 with the first switching circuit 8 being turned on, while the energy formed within the reactor 7 is transferred to the waveform smoothing condenser 10 through the diode 9 with the first switching circuit 8 being turned off.

In this case, the first switching circuit 8 is controlled to be turned on or off in order that the electric current flowing the first switching circuit 8 is in the same phase with the sine wave of the AC voltage and that the voltage across the waveform smoothing condenser 10 is maintained at a constant voltage. The first embodiment of the present invention is supplied with power after starting from the secondary winding 27 of the reactor through the diode 28 and the capacitor 29.

The DC-DC converter 11 starts its operation when electric power is supplied to the second control circuit 13 through the start-up resistance 12 on the basis of the constant voltage as obtained by the power factor correction circuit 4. In this case, the second control circuit 13 serves to generate an AC voltage across the primary winding 15, the secondary winding 16 and the tertiary winding 17 of the transformer 14 by turning on and off the second switching circuit 18.

The AC voltage as generated through the secondary winding 16 is rectified by means of the diode 19, converted into a DC voltage by means of the waveform smoothing condenser 20 and outputted through the output terminal 23.

On the other hand, the AC voltage as generated through the tertiary winding 17 is converted into a DC voltage Vcc by means of the diode 21 and the waveform smoothing condenser 22. The second control circuit 13 is powered by the DC voltage Vcc from the tertiary winding 17 through the diode 21 and the capacitor 22 after starting the operation.

However, in the case of the prior art DC power supply apparatus as explained heretofore, DC power is always supplied to the first control circuit from the rectifier circuit 3 so that the power factor correction circuit continues its operation even if the load to the DC power supply apparatus is so light that it is not necessary to improve the power factor.

In other words, the efficiency is lowered due to power loss when the DC power supply apparatus is connected to a light load since the first switching circuit is always operating.

### SUMMARY OF THE INVENTION

The present invention has been made in order to solve the shortcomings as described above. It is an important object of the present invention to provide an improved DC power supply apparatus which can be driven with high efficiency without power loss even with a light load connected to the DC power supply apparatus.

In accordance with an aspect of the present invention, the improvement resides in a DC power supply apparatus comprising: a rectifier circuit for rectifying an AC voltage; a power factor correction circuit connected to said rectifier circuit; and a DC-DC converter connected to said power factor correction circuit for adjusting an output voltage, wherein the operation of said power factor correction circuit is halted when the load connected to said DC-DC converter is no heavier than a predetermined level.

In a preferred embodiment, further improvement resides in that said power factor correction circuit is composed of a reactor, a switching circuit for DC level conversion connected to said reactor and a control circuit connected to and controlling said switching circuit by outputting a control signal to said switching circuit.

In a preferred embodiment, further improvement resides in that said power factor correction circuit is powered by means of the DC voltage obtained from said DC-DC converter.

In a preferred embodiment, further improvement resides in that said power factor correction circuit is powered by means of an output voltage obtained from another DC-DC converter than said DC-DC converter.

In a preferred embodiment, further improvement resides in that said apparatus further includes an average value signal generation circuit for generating an average value signal which is obtained by averaging the control signal output from the control circuit of said DC-DC converter to said switching circuit; and a control circuit receiving said average value signal and connected to said power factor correction circuit in order to halt the supply of the control signal to said switching circuit and thereby halt the operation of said switching circuit when said average value signal is indicative that the load is no heavier than said predetermined level.

In a preferred embodiment, further improvement resides in that the control circuit of said power factor correction circuit starts turning on and off said power factor correction circuit after the control circuit of said power factor correction circuit is powered by the DC voltage of said DC-DC converter.

### BRIEF DESCRIPTION OF DRAWINGS

The aforementioned and other features and objects of the present invention and the manner of attaining them will become more apparent and the invention itself will be best understood by reference to the following description of a preferred embodiment taken in conjunction with the accompanying drawings, wherein:
Fig. 1 is a circuit diagram showing the configuration of a DC power supply apparatus in accordance with a prior art technique.
Fig.2 is a circuit diagram showing a DC power supply apparatus in accordance with an embodiment of the present invention.
Fig.3 which is a schematic diagram showing waveforms for explaining the operation of the DC power supply apparatus in accordance with the embodiment of the present invention.

### DETAILED DESCRIPTION OF EMBODIMENTS

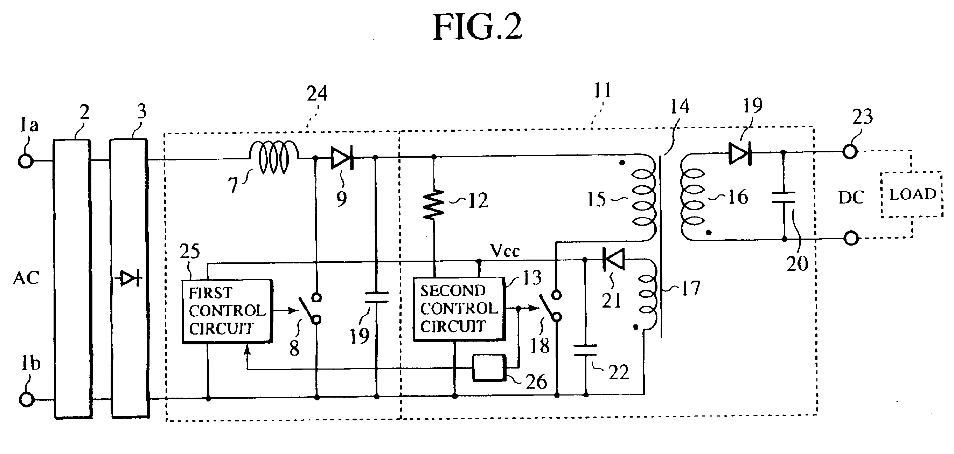

Fig.2 is a circuit diagram showing a DC power supply apparatus in accordance with an embodiment of the present invention. In the figures, like references indicative of identical or functionally similar elements are given as illustrated in Fig. 1, and therefore redundant explanation is not repeated.

As illustrated in Fig.2, the power factor correction circuit 24 of the DC power supply apparatus in accordance with the present embodiment is equipped with a first control circuit 25 which has a different configuration than that as illustrated in Fig.1.

The first control circuit 25 is connected in parallel with the second control circuit 13 of the DC-DC converter 11 and powered, as well as the second control circuit 13, by the voltage Vcc as generated by the tertiary winding 17, the capacitor 22 and the diode 21. When a predetermined time elapses after powered, the first control circuit 25 serves to alternately turn on and off the first switching circuit 8 if the average value signal as output from the average value signal generation circuit, as explained in the following description, is no lower than the predetermined reference value. On the other hand, the first control circuit 25 serves to stop alternately turning on and off the first switching circuit 8 if the average value signal as output from the average value signal generation circuit is no higher than the predetermined reference value.

The average value signal generation circuit 26 serves to output to the first control circuit 25 of the power factor correction circuit 24 the average value signal indicative of the DC level which is obtained by averaging the pulsed signal as output from the second control circuit 13 to the second switching circuit 18.

Meanwhile, the second control circuit 13 of the DC-DC converter 11 serves to control the pulse width of the pulse signal which is used for turn on and off the second switching circuit 18 in order to make narrower the pulse width with a lighter load so that the output voltage is maintained at the constant value

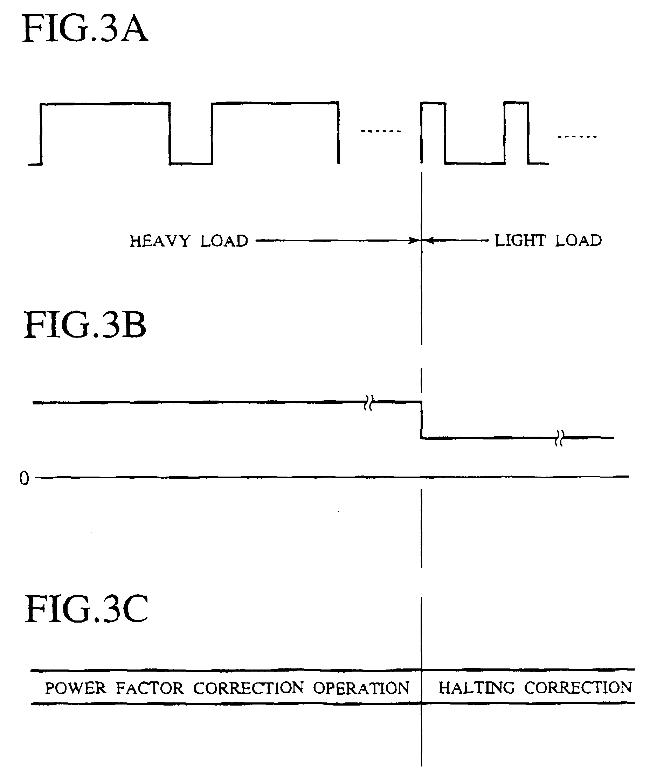

The operation of the DC power supply apparatus in accordance with the present embodiment as explained heretofore will be explained with reference to Fig.2 and Fig.3 which is a schematic diagram showing waveforms.

When an AC voltage is applied to the input terminals 1a and 1b the filter circuit 2 functions to eliminate noise while the rectifier circuit 3 functions to rectify the AC voltage as explained heretofore. The voltage as rectified is supplied to the DC-DC converter 11 as a driving power and supplied to the second control circuit 13 the start-up resistance 12. By this configuration, the second control circuit 13 starts its operation so as to control the on/off operation of the second switching circuit 18 in order to supply the load with necessary power by means of the secondary winding 16 A voltage is induced also across the tertiary winding 17 at the same time, and rectified and smoothed by means of the diode 21 and the capacitor 22 in order to generate a DC voltage as a power source for the first and second control circuits 25 and 13 after the circuits have started operation. Namely, the second control circuit 13 of the DC-DC converter 11 is supplied with the electric power through the resistor 12 when starting up However, the second control circuit 13 is thereafter supplied with the electric power from the DC voltage Vcc as output from the tertiary winding 17 as well as the first control circuit 25 of the power factor correction circuit 24.

Meanwhile, the average value signal generation circuit 26 serves to average the pulse signal as output to the second switching circuit 18 from the second control circuit 13 and to output the averaged signal to the first control circuit 25 of the power factor correction circuit 24 as the average value signal.

The first control circuit 25 of the power factor correction circuit 24 starts to turn on and off the first switching circuit 8 a predetermined time after the voltage Vcc is applied thereto while comparing the voltage level of the average value signal with the reference value. The first control circuit 25 then serves to continue to alternately turn on and off the first switching circuit 8 if the average value signal is no lower than the reference value. On the other hand, the first control circuit 25 judges otherwise that the load is light if the average value signal is no higher than the reference value and stops alternately turning on and off the first switching circuit 8.

Namely, the average value signal generation circuit 26 serves to average the pulse signal used to turn on and off the switching operation by means of the second control circuit 13 as illustrated in Fig.3(b).

The pulse width (the turning-on period) of the pulse signal is widened with a heavy load and made narrow with a light load near to the reference value as illustrated in Fig.3(b). The output signal of the tertiary winding 17 is induced by the primary winding 15, rectified by the capacitor 22 and the diode 21 to generate the voltage Vcc which is supplied to the second control circuit 13 as a power source.

For this reason, the average value signal as output from the average value signal generation circuit 26 is lowered with a light load as illustrated in Fig.3(b).

Accordingly, as illustrated in Fig.3(c), the first control circuit 25 of the power factor correction circuit 24 is activated to serve to output the pulse signal in order to continue the on/off operation of the switching operation when the load is relatively heavy while the first control circuit 25 stops outputting the pulse signal in order to inactivate the power factor correction circuit 24 and halt the on/off operation of the switching operation when the load is relatively light.

The foregoing description of preferred embodiments has been presented for purposes of illustration and description. It is not intended to be exhaustive or to limit the invention to the precise form described, and obviously many modifications and variations are possible light of the above teaching. The embodiment was chosen in order to explain most clearly the principles of the invention and its practical application thereby to enable others in the art to utilize most effectively the invention in various embodiments and with various modifications as are suited to the particular use contemplated.

For example, the state of the load can be detected by the use of a comparator having a hysteresis loop for comparing the average value of the pulse signal with the reference value. Also, the pulse signal can be evaluated in a different manner than conversion to the average value signal such as by converting effective values, integrated values and so forth. Furthermore, the turning-on period can be evaluated by means of incrementing the value of a counter during turning on. Furthermore, in the case that a frequency controlling technique is used, the state of the load can be detected on the basis of the frequency. Still further, the DC-DC converter 11 can be designed as any one of a flyback converter circuit, a forward converter circuit, an oscillating converter circuit and so forth. Also, the first switching circuit 8 of the power factor correction circuit 24 and the second switching circuit 18 of the DC-DC converter 11 can be implemented with any of bipolar transistors, field effect transistors, insulated gate transistors and so forth.

Furthermore, the controllable power source of the power factor correction circuit can be given from another DC-DC converter.

## Claims

1. A DC power supply apparatus comprising:
a rectifier circuit for rectifying an AC voltage;
a power factor correction circuit connected to said rectifier circuit; and
a DC-DC converter connected to said power factor correction circuit for adjusting an output voltage,
wherein the operation of said power factor correction circuit is halted when the load connected to said DC-DC converter is no heavier than a predetermined level.

2. The DC power supply apparatus as claimed in claim 1 wherein
said power factor correction circuit is composed of a reactor, a switching circuit for DC level conversion connected to said reactor and a control circuit connected to and controlling said switching circuit by outputting a control signal to said switching circuit.

3. The DC power supply apparatus as claimed in claim 2 wherein
said power factor correction circuit is powered by means of a DC voltage obtained from said DC-DC converter.

4. The DC power supply apparatus as claimed in claim 2 wherein
said power factor correction circuit is powered by means of an output voltage obtained from another DC-DC converter than said DC-DC converter.

5. The DC power supply apparatus as claimed in claim 5 wherein
said apparatus further includes an average value signal generation circuit for generating an average value signal which is obtained by averaging the control signal output from the control circuit of said DC-DC converter to said switching circuit; and
a control circuit receiving said average value signal and connected to said power factor correction circuit in order to halt the supply of the control signal to said switching circuit and thereby halt the operation of said switching circuit when said average value signal is indicative that the load is no heavier than said predetermined level.

6. The DC power supply apparatus as claimed in claim 2 wherein
the control circuit of said power factor correction circuit starts turning on and off said power factor correction circuit after the control circuit of said power factor correction circuit is powered by the DC voltage of said DC-DC converter.
